# DEMANDE DE BREVET EUROPEEN

(11) **EP 1 791 272 A1**
(43) Date de publication de la demande: **30.05.2007**
(21) Numéro de dépôt: 06301128.2
(22) Date de dépôt: 07.11.2006
(51) Int. Cl.: H04B 10/08

(54) **Dispositif de commutation optique à adjonction de signature pour le suivi des chemins optiques de connexion dans un réseau**

(30) Priorité: 24.11.2005 FR 0553589
(71) Demandeur: Alcatel Lucent, 75008 Paris (FR)
(72) Inventeur: Peloso, Pierre, 91460 Marcoussis (FR); Zami, Thierry, 91300, MASSY (FR); Lavigne, Bruno, 92160, ANTONY (FR); Chiaroni, Dominique, 92160, ANTONY (FR); Noirie, Ludovic, 91620, NOZAY (FR)
(74) Mandataire: Thibaud, Jean-Baptiste

(57) **Abrégé**

Un dispositif (D) est dédié à la commutation optique dans un noeud de commutation (NC) d'un réseau optique transparent. Ce dispositif (D) comprend i) au moins un port d'entrée destiné à être couplé à une ligne optique amont (FE1-FE4) dédiée au transport de canaux multiplexés, ii) au moins une voie de sortie, iii) des moyens de commutation (MC) couplant chaque port d'entrée au moins à chaque voie de sortie, et iv) des moyens de traitement (MT1-MT4) chargés d'adjoindre aux canaux qui parviennent sur chaque port d'entrée une signature comportant une première information représentative du noeud de commutation (NC), ainsi qu'éventuellement du port d'entrée qui les a reçus.

## Description

L'invention concerne les réseaux optiques transparents, et plus précisément le suivi des chemins optiques de connexion établis au sein de tels réseaux, via leurs noeuds de commutation.

On entend ici par « chemin optique de connexion » un chemin physique qu'empruntent des signaux optiques émis à une longueur d'onde donnée au sein d'un réseau optique transparent. Un tel chemin physique est défini par des portions de lignes optiques constituées généralement de fibres optiques et raccordant des paires de noeuds de commutation transparents.

Les signaux sont transportés dans des canaux (tuyaux logiques) associés chacun à un chemin optique de connexion.

Par ailleurs, on entend ici par « réseau optique transparent » un réseau dans lequel les canaux demeurent constamment dans le domaine optique.

En outre, on entend ici par « noeud de commutation transparent » un équipement de réseau comportant au moins un dispositif de commutation optique, de type transparent, chargé d'aiguiller des canaux de longueurs d'onde multiplexés ou à multiplexer en provenance de lignes optiques amont et destinés à des lignes optiques aval.

De plus, on entend ici par « multiplex » un ensemble de canaux de longueurs d'onde différentes empruntant conjointement un même média.

Comme le sait l'homme de l'art, il est particulièrement important pour les opérateurs de savoir si les chemins optiques de connexion qui sont établis entre les noeuds de commutation de leurs réseaux optiques transparents sont en adéquation avec les états de programmation respectifs des dispositifs de commutation optique de ces noeuds de commutation. Toute inadéquation résulte d'un problème, soit de programmation, soit de fonctionnement d'un noeud de commutation, soit encore dans une portion de ligne optique, auquel il faut remédier.

Afin de vérifier l'adéquation précitée, on met en oeuvre dans les réseaux des procédés dits de « suivi et vérification des chemins optiques de connexion ». Cette vérification permet ainsi de vérifier la connectivité d'un chemin optique de connexion, c'est-à-dire si le canal relie la bonne source au bon destinataire. Dans un réseau optique non transparent, cette mise en oeuvre est relativement aisée du fait que l'on effectue au sein des noeuds de commutation des conversions de signaux de type optique/électrique/optique qui permettent, par l'ajout de trafic de contrôle, de vérifier que chaque récepteur est bien mis en relation avec la source correspondante au niveau de chaque lien.

Tel n'est pas le cas dans un réseau optique transparent du fait de l'absence de conversion de signaux de type optique/électrique/optique (les dispositifs de commutation optique opèrent en effet au niveau de la couche physique, et plus précisément sur les longueurs d'onde des canaux).

Pour remédier à cet inconvénient, plusieurs solutions ont été proposées.

Une première solution, qui est l'extrapolation de ce qui se passe dans un réseau non transparent, consiste à injecter un trafic de contrôle dans les lignes optiques afin de tester l'accord entre la source et la destination des différents chemins optiques de connexion. Cette solution présente l'inconvénient majeur de consommer de la bande passante ainsi que de ne délivrer aucune information sur la localisation d'une possible erreur, ce qui rend la réparation plus difficile.

Une deuxième solution consiste à associer à chaque source de signal (et donc à chaque canal) utilisée dans le réseau au moins une fréquence qui est appliquée au canal par sur-modulation. En analysant une longueur d'onde en un endroit choisi du réseau on peut déterminer la ou les fréquences de sur-modulation appliquées et donc connaître le canal présent grâce à des informations fournies par le gestionnaire du réseau. Ces informations sont au moins la correspondance entre les fréquences de sur-modulation et les canaux, qui permet de déterminer le chemin emprunté par ce canal. Cette solution est notamment proposée par la société Tropics sous le nom commercial « Wavelength Tracker^{®} ».

Cette deuxième solution nécessite l'utilisation d'autant de modules de traitement, par exemple de type atténuateur optique variable (ou VOA pour « Variable Optical Attenuator »), qu'il y a de canaux utilisés dans le réseau. Les atténuateurs optiques variables sont placés en amont de chaque port d'insertion d'un dispositif de commutation optique de manière à effectuer la sur-modulation des canaux à insérer dans le trafic. Cela entraîne des coûts importants et pose des problèmes lorsque l'on veut transformer un réseau d'une certaine taille en un réseau d'une taille plus grande (c'est-à-dire le passage à l'échelle (ou « scalability »)) du fait des nouvelles fréquences de sur-modulation qui doivent être utilisées pour être appliquées aux nouveaux canaux.

Une troisième solution consiste à adjoindre localement à chaque canal qui est parvenu dans un noeud de commutation sur l'un de ses ports d'entrée une sur-modulation dont la fréquence est dédiée au dit port d'entrée récepteur. On utilise donc localement dans chaque noeud de commutation autant de fréquences de sur-modulation qu'il y a de ports d'entrée. Chaque canal sur-modulé est analysé en amont (ou en aval) des voies de sortie (ports de sortie et/ou ports d'extraction) du noeud de commutation, dans lequel il a fait l'objet de ladite sur-modulation, de manière à déterminer le chemin de commutation qu'il a suivi à l'intérieur de ce noeud de commutation, puis cette sur-modulation est supprimée du canal analysé afin qu'il poursuive sa route au sein du réseau. Cette troisième solution est notamment décrite dans le document brevet US 6,559,984.

L'inconvénient de cette troisième solution réside dans le fait qu'elle ne permet d'effectuer que des analyse locales (c'est-à-dire à l'intérieur de chaque noeud) et non un suivi des chemins optiques de connexion de type bout-en-bout (ou « end-to-end »), au moyen d'une analyse des canaux seulement au niveau du noeud de commutation dans lequel ils sont utilisés. De plus le nombre de VOAs nécessaires pour effacer les canaux est prohibitif en terme de coût.

L'invention a donc pour but de remédier à une partie au moins des inconvénients présentés par les solutions connues.

Elle propose à cet effet un dispositif de commutation optique, pour un noeud de commutation d'un réseau optique transparent, comprenant, d'une première part, au moins un port d'entrée destiné à être couplé à une ligne optique amont dédiée au transport de canaux multiplexés, d'une deuxième part, au moins une voie de sortie (port de sortie destiné à être couplé à une ligne optique aval dédiée au transport de canaux multiplexés ou port d'extraction), et d'une troisième part, des moyens de commutation couplant chaque port d'entrée à chaque voie de sortie.

Ce dispositif de commutation optique se caractérise par le fait qu'il comprend en outre des moyens de traitement chargés d'adjoindre aux canaux qui parviennent sur chaque port d'entrée d'un noeud de commutation une signature comportant une première information représentative au moins de ce noeud de commutation.

On entend ici par « signature » toute modification appliquée à un canal ou multiplex et permettant de marquer le passage de ce canal ou des canaux composant ce multiplex en un endroit donné.

Le dispositif selon l'invention peut comporter d'autres caractéristiques qui peuvent être prises séparément ou en combinaison, et notamment :
- ses moyens de traitement peuvent être chargés d'adjoindre à chaque canal (ou chaque canal de chaque multiplex) une signature comportant une première information représentative de leur propre noeud de commutation et une seconde information représentative du port d'entrée qui a reçu le canal ;
- ses moyens de traitement peuvent être chargés d'appliquer une même surmodulation d'amplitude à une fréquence choisie (formant une première information), représentative de leur propre noeud de commutation, à chaque canal (ou chaque canal de chaque multiplex) reçu par chaque port d'entrée ;
- ses moyens de traitement peuvent par exemple être chargés d'appliquer aux premières informations (éventuellement aux sur-modulations), qui sont appliquées aux canaux reçus par des ports d'entrée (et d'insertion) différents, des sur-modulations d'amplitude à des fréquences différentes ou des déphasages différents (formant des secondes informations) représentatifs respectivement de ces ports d'entrée (ou d'insertion) ;
- ses moyens de traitement peuvent comporter des modules de traitement en nombre égal au moins au nombre des ports d'entrée et chargés chacun d'adjoindre la signature aux canaux reçus par le port d'entrée correspondant,
- ses moyens de traitement peuvent comporter au moins un module de traitement additionnel chargé d'adjoindre la signature aux canaux introduits par un port d'insertion couplé à un module d'insertion ;
- ses moyens de traitement peuvent comporter des modules de traitement additionnels en nombre égal au nombre des ports d'insertion et chargés chacun d'adjoindre la signature aux canaux introduits par le port d'insertion correspondant ;
- chaque module de traitement peut par exemple être agencé sous la forme d'un atténuateur optique variable commandé électriquement ;
- il peut également comprendre des moyens d'analyse chargés d'analyser les canaux qui sont délivrés par certaines au moins des voies de sortie, afin de déterminer la signature qui leur a été adjointe par les moyens de traitement de leur propre noeud de commutation ;
   ➢ ces moyens d'analyse peuvent être chargés de déterminer un état physique du dispositif de commutation à partir de la détermination des canaux délivrés par une ou chaque voie de sortie et de la signature qui a été adjointe à chacun desdits canaux par lesdits moyens de traitement du dispositif de commutation, de vérifier une correspondance entre ledit état physique du dispositif de commutation et un état de programmation définissant les canaux qui doivent être délivrés sur ladite ou chaque voie de sortie et les ports d'entrée sur lesquels lesdits canaux doivent parvenir audit dispositif de commutation, et à générer un message d'alarme en cas de non correspondance ;
   ➢ ces moyens d'analyse peuvent être chargés d'analyser les canaux qui sont délivrés par des voies de sortie, afin de déterminer chaque signature qui leur a été adjointe par les moyens de traitement de chaque noeud de commutation par lequel ils ont transité, y compris le leur ;
   ➢ ces moyens d'analyse peuvent être chargés d'analyser chaque seconde information adjointe à chaque première information de chaque canal par les moyens de traitement de chaque noeud de commutation par lequel il a transité, y compris le leur ;
   ➢ ces moyens d'analyse peuvent par exemple comporter des modules d'analyse en nombre égal au nombre de voies de sortie à analyser et chargés chacun d'analyser les canaux reçus par la voie de sortie correspondante ;
   ➢ en variante, on peut prévoir un commutateur comprenant des entrées couplées respectivement aux voies de sortie à analyser et au moins une sortie, et des moyens d'analyse comportant un module d'analyse mutualisé comprenant une entrée couplée à la sortie du commutateur et chargé d'analyser les canaux reçus par l'une des voies de sortie à analyser, sélectionnée par le commutateur ;
   ➢ chaque module d'analyse peut par exemple comprendre un sous-module de filtrage optique chargé de séparer les canaux délivrés par la voie de sortie correspondante, ainsi qu'au moins un sous-module de conversion optique/électrique chargé de convertir chaque canal en signal électrique, et un sous-module d'analyse électrique chargé d'identifier chaque signature adjointe à chaque canal séparé ;
   - ses moyens de traitement peuvent être chargés d'appliquer une signature à tous les canaux d'un multiplex simultanément ;
   - ses moyens de commutation peuvent comprendre, d'une première part, un premier étage comportant N modules de diffusion munis chacun d'une première entrée, couplée à l'un des ports d'entrée, et M premières sorties, propres chacune à délivrer au moins l'un des canaux multiplexés reçus par la première entrée, d'une deuxième part, un deuxième étage comportant M modules de fusion comprenant chacun N deuxièmes entrées, propres à recevoir chacune au moins un canal d'une longueur d'onde, et une deuxième sortie couplée à un port de sortie constituant l'une des voies de sortie et propre à délivrer au moins un canal reçu sur l'une des deuxièmes entrées, et d'une troisième part, un troisième étage comportant au moins NxM liens optiques couplant au moins les premières sorties aux deuxièmes entrées de sorte que chacun des N modules de diffusion soit couplé à chacun des M modules de fusion ;
   ➢ ces modules de diffusion peuvent par exemple être choisis parmi les coupleurs optiques à une entrée et M sorties et les modules de sélection de longueurs d'onde, par exemple de type WSS ;
   ➢ ces modules de fusion peuvent par exemple être choisis parmi les coupleurs optiques à N entrées et une sortie et les modules de sélection de longueurs d'onde, par exemple de type WSS. On notera que soit les modules de fusion sont de type non sélectif et les modules de diffusion de type sélectif, soit les modules de fusion sont de type sélectif et les modules de diffusion de type non sélectif ou sélectif.

L'invention propose également un noeud de commutation, pour un réseau (D)WDM, équipé d'au moins un dispositif de commutation optique du type de celui présenté ci-avant. Un tel noeud de commutation peut par exemple se présenter sous la forme d'un brasseur optique transparent.

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un dispositif de commutation optique selon l'invention, et
- la figure 2 illustre de façon schématique et fonctionnelle un second exemple de réalisation d'un dispositif de commutation optique selon l'invention.

Les dessins annexés pourront non seulement servir à compléter l'invention, mais aussi contribuer à sa définition, le cas échéant.

L'invention a pour objet de permettre le suivi des chemins optiques de connexion établis dans un réseau optique transparent, aussi bien dans un mode d'analyses locales (c'est-à-dire au moyen d'analyses effectuées dans chaque noeud de commutation du réseau), que dans un mode d'analyse de type bout-en-bout (c'est-à-dire au moyen d'analyses effectuées dans chaque (« dernier ») noeud de commutation qui se trouve placé à l'extrémité d'un chemin optique de connexion).

Dans ce qui suit, on considère à titre d'exemple non limitatif que les noeuds de commutation sont des brasseurs optiques transparents (ou OXCs pour « Optical Cross-Connects »), éventuellement à fonction d'insertion et/ou extraction, d'un réseau à multiplexage de longueurs d'onde (ou (D)WDM pour « (Dense) Wavelength Division Multiplexing »). Mais, il pourrait également s'agir de multiplexeurs optiques à insertion/extraction (ou OADMs pour « Optical Add/Drop Multiplexers »).

Il est tout d'abord rappelé qu'un chemin optique de connexion est un trajet physique emprunté par des signaux optiques émis à une longueur d'onde donnée au sein d'un réseau optique transparent, et que ces signaux sont transportés dans des canaux (tuyaux logiques) associés chacun à un chemin optique de connexion. Un tel trajet (ou chemin) physique est défini par des portions de lignes optiques constituées généralement de fibres optiques et raccordant des paires de noeuds de commutation transparents.

Par ailleurs, des canaux, associés à des longueurs d'onde différentes et empruntant conjointement un même média, peuvent être multiplexés afin de constituer un multiplex.

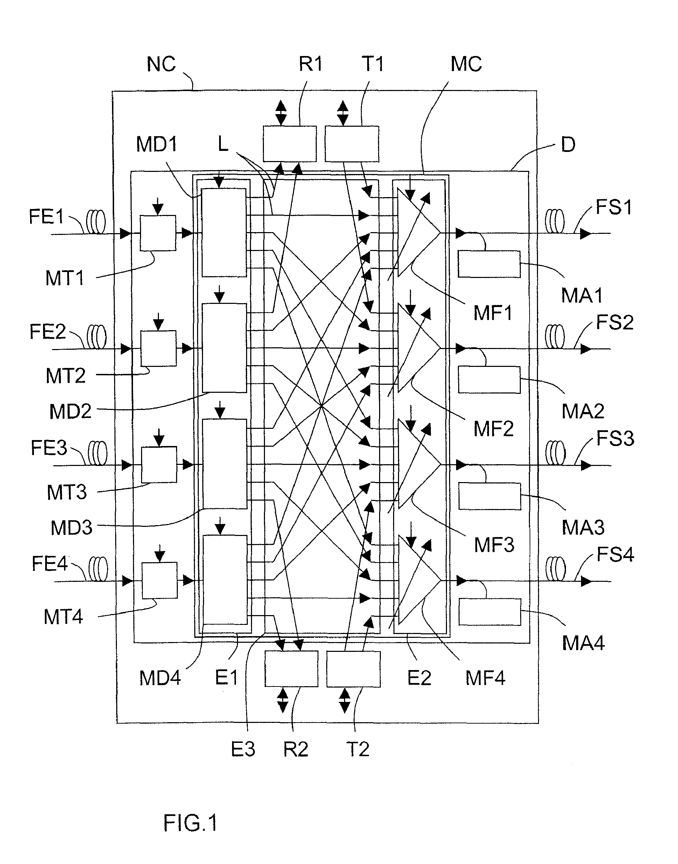

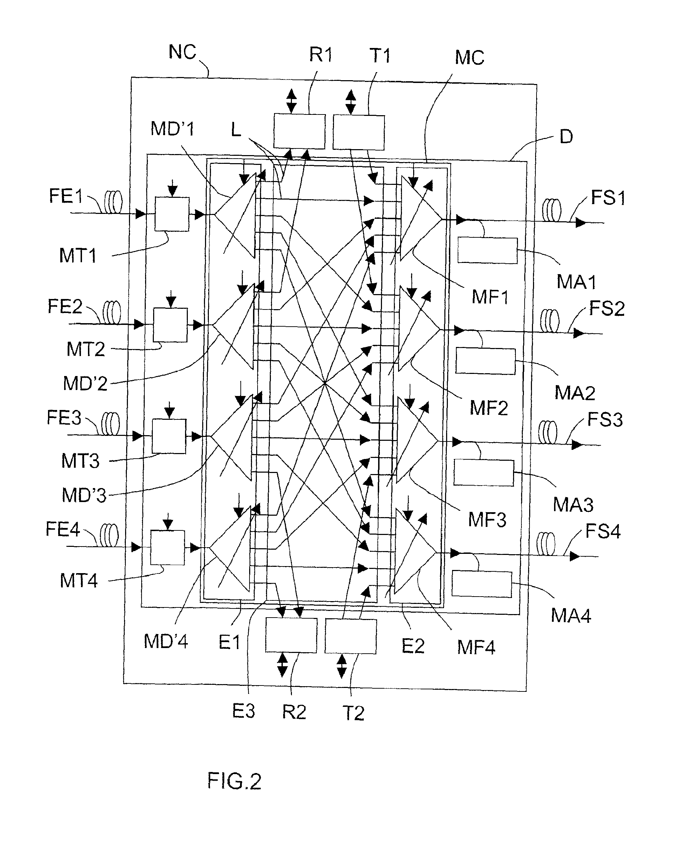

Comme cela est illustré sur les figures 1 et 2, un noeud (de commutation) NC comprend au moins un dispositif de commutation optique D, selon l'invention.

Le dispositif D comporte tout d'abord N ports d'entrée couplés respectivement à des lignes optiques d'entrée FEi (i = 1 à N), comme par exemple des fibres optiques, dans lesquelles « circulent » des canaux multiplexés, également appelés multiplex spectral de signaux optiques. Dans les exemples illustrés sur les figures 1 et 2, l'indice i prend des valeurs comprises entre 1 et 4, du fait que N est égal à 4 (à titre illustratif). Mais, cet indice i n'est pas limité à ces valeurs qui sont fixées par le nombre N de ports d'entrée du dispositif D. Il peut en effet prendre n'importe quelle valeur comprise entre 1 et N, avec N supérieur ou égal à un (N ≥1).

Par exemple chaque fibre optique d'entrée FEi est capable de transporter R canaux optiques (R>0).

Le dispositif D comporte également M ports de sortie couplés respectivement à des lignes optiques de sortie FSj (j = 1 à M), comme par exemple des fibres optiques, dans lesquelles « circulent » des canaux multiplexés, également appelés multiplex spectral de signaux optiques. Dans les exemples illustrés sur les figures 1 et 2, l'indice j prend des valeurs comprises entre 1 et 4, du fait que M est égal à 4 (à titre illustratif). Mais, cet indice j n'est pas limité à ces valeurs qui sont fixées par le nombre M de ports de sortie du dispositif D. Il peut en effet prendre n'importe quelle valeur comprise entre 1 et M, avec M supérieur ou égal à un (M ≥1).

Il est important de noter que les M ports de sortie constituent M voies de sortie. Mais, comme on le verra plus loin le dispositif peut comporter une ou plusieurs autres voies de sortie définissant chacune un port d'extraction. Par conséquent, on entend ici par voie de sortie aussi bien un port de sortie, couplé à une ligne optique de sortie FSj, qu'un port d'extraction.

Le dispositif D comporte également un module de commutation MC qui peut être fonctionnellement décomposé en des premier E1, deuxième E2 et troisième E3 étages. N'importe quel type de module de commutation MC peut être envisagé, et non pas seulement celui qui va être décrit ci-après en référence aux figures 1 et 2.

Le premier étage E1 (illustré sur les figures 1 et 2) comporte N modules de diffusion MDi (i = 1 à N) comprenant chacun au moins une première entrée et M premières sorties. Comme indiqué ci-avant, dans les exemples illustrés sur les figures 1 et 2, N et M sont égaux à quatre (N = 4, M = 4), mais N comme M peuvent prendre n'importe quelle valeur supérieure ou égale à un (N ≥1, M ≥1).

Chaque première entrée est destinée à être couplée à un port d'entrée du dispositif D et donc à une ligne optique d'entrée FEi.

Chaque module de diffusion MDi est chargé d'aiguiller des canaux optiques multiplexés qu'il reçoit sur son entrée (couplée à une ligne optique d'entrée FEi) en fonction de leurs longueurs d'onde respectives vers une ou plusieurs de ses M premières sorties. En d'autres termes, un module de diffusion MDi assure une fonction de « routage interne » qui lui permet de délivrer sur chacune de ses M premières sorties un ou plusieurs canaux optiques (voire même tous) d'un multiplex qu'il a reçu sur son unique entrée.

Dans les exemples illustrés sur les figures 1 et 2, chaque module de diffusion MDi comprend une première sortie d'extraction qui est couplée à un port d'extraction (ou voie de sortie) d'un module d'extraction d'un ou plusieurs canaux R1 ou R2 du noeud NC. Dans une variante, les modules d'extraction R1 et R2 pourraient faire partie du dispositif D. Par ailleurs, sur les figures 1 et 2 on a représenté deux modules d'extraction séparés, mais ils pourraient être regroupés en un unique module. Cette première sortie d'extraction permet de récupérer au niveau du noeud NC les signaux qui sont contenus dans un ou plusieurs canaux transportés par l'une quelconque des lignes d'entrée FEi, en vue d'un traitement local et/ou d'une transmission à au moins un terminal raccordé au noeud NC.

Dans le premier exemple illustré sur la figure 1, les modules de diffusion MDi sont de type non sélectif. Il s'agit par exemple de coupleurs optiques (ou « optical splitters »), chargés de délivrer sur chacune de ses premières sorties l'ensemble des canaux optiques reçu sur sa première entrée.

Dans une variante, les modules de diffusion pourraient être de type sélectif. C'est notamment le cas du second exemple de réalisation illustré sur la figure 2. Dans ce cas, ils constituent par exempte des modules de sélection de longueurs d'onde de type WSS (MD'i), tels que ceux présentés dans la partie introductive. Ces modules de sélection de longueurs d'onde MD'i sont réglables en fonction d'une commande, et peuvent délivrer sur chacune de leurs M premières sorties soit un canal optique sélectionné parmi les canaux optiques reçus sur leur première entrée, soit un multiplex constitué d'un ensemble de canaux optiques sélectionnés parmi les canaux optiques du multiplex reçu sur leur première entrée, en fonction d'une commande spécifique. Il est important de noter que chaque canal reçu sur la première entrée ne peut être distribué que sur une unique première sortie. La sélection des canaux se fait en interne au moyen de filtres intégrés.

Les modules WSS sont notamment décrits dans le document de T. Ducellier et al. « The MWS 1x4 : A High Performance Wavelength Switching Building Block », Conférence ECOC'2002, Copenhague, 9 septembre 2002, 2.3.1.

Les modules de sélection de longueurs d'onde de type WSS sont avantageux du fait, notamment, qu'ils induisent de faibles pertes d'insertion comparées à celles induites par de simples coupleurs, lorsque leur nombre de sorties (M) est supérieur à 4.

Le deuxième étage E2 (illustré sur les figures 1 et 2) comporte M modules de fusion MFj comprenant chacun N deuxièmes entrées et au moins une deuxième sortie qui est couplée à l'un des M ports de sortie du dispositif D, et donc à l'une des M lignes optiques de sortie FSj.

Chaque module de fusion MFj assure une fonction d'aiguillage interne (éventuellement programmable) permettant de fournir sur au moins une deuxième sortie soit un canal optique sélectionné parmi les canaux optiques reçus sur ses N deuxièmes entrées, soit un multiplex constitué d'un ensemble de canaux optiques sélectionnés parmi les canaux optiques reçus sur ses N deuxièmes entrées.

Dans les exemples illustrés sur les figures 1 et 2, chaque module de fusion MFj comprend une deuxième entrée d'insertion qui est couplée à un module d'insertion d'un ou plusieurs canaux T1 ou T2 du noeud NC. Dans une variante, les modules d'insertion T1 et T2 pourraient faire partie du dispositif D. Par ailleurs, sur les figures 1 et 2 on a représenté deux modules d'insertion séparés, mais ils pourraient être regroupés en un unique module. Cette deuxième entrée d'insertion permet d'alimenter le module de fusion MFj concerné avec un ou plusieurs canaux de manière à le(s) multiplexer, éventuellement, avec d'autres canaux reçus par l'une au moins de ses autres deuxièmes entrées.

Dans les exemples illustrés sur les figures 1 et 2, les modules de fusion MFj sont de type sélectif. Il s'agit par exemple de modules de sélection de longueurs d'onde de type WSS, tels que ceux présentés ci-avant et dans la partie introductive. Dans ce cas, ils sont réglables en fonction d'une commande, et peuvent délivrer sur leur unique deuxième sortie soit un canal optique sélectionné parmi les canaux optiques reçus sur leurs N deuxièmes entrées, soit un multiplex constitué d'un ensemble de canaux optiques sélectionnés parmi les canaux optiques reçus sur leurs N deuxièmes entrées, en fonction d'une commande spécifique.

Mais, dans une variante, ils pourraient être de type non sélectif. Dans ce cas, ils constituent par exemple des coupleurs optiques (ou « optical couplers »), chargés de délivrer sur au moins une deuxième sortie un multiplex constitué de l'ensemble des canaux optiques reçus sur leurs N deuxièmes entrées.

D'une manière générale, l'invention s'applique à tous les modes de réalisation dans lesquels soit les modules de fusion sont de type non sélectif et les modules de diffusion de type sélectif, soit les modules de fusion sont de type sélectif et les modules de diffusion de type non sélectif ou sélectif.

Le troisième étage E3 (illustré sur les figures 1 et 2) comporte au moins NxM liens optiques L couplant chacun l'une des M premières sorties de l'un des N modules de diffusion MDi (ou MD'i) à l'une des N deuxièmes entrées de l'un des M modules de fusion MFj. Comme cela est illustré sur les figures 1 et 2, le troisième étage E3 peut également comporter des liens optiques L couplant soit l'une des premières sorties de l'un des N modules de diffusion MDi (ou MD'i) à un port d'extraction (ou voie de sortie) de l'un des modules d'extraction T1, T2, soit l'un des modules d'insertion R1, R2 à la deuxième entrée (d'insertion) de l'un au moins des M modules de fusion MFj.

Il est important de noter qu'un module de diffusion MDi (ou MD'i) peut éventuellement comporter plusieurs premières sorties d'extraction, tout comme un module de fusion MFj peut éventuellement comporter plusieurs deuxièmes entrées d'insertion.

Dans ce qui précède, on a décrit un premier exemple de réalisation de module de commutation MC (en référence à la figure 1) dans lequel les modules de diffusion MDi sont tous des coupleurs optiques (optical splitters) et les modules de fusion MFj sont tous des modules de sélection de longueurs d'onde (par exemple de type WSS), et un second exemple de réalisation de module de commutation MC (en référence à la figure 2) dans lequel les modules de diffusion MD'i et les modules de fusion MFj sont tous des modules de sélection de longueurs d'onde (par exemple de type WSS). Mais, on peut également envisager au moins un troisième exemple de réalisation dans lequel les modules de diffusion sont tous des modules de sélection de longueurs d'onde (par exemple de type WSS) et les modules de fusion sont tous des coupleurs optiques (optical couplers).

L'invention n'est pas limitée aux exemples de module de commutation MC décrits ci-avant, notamment en référence aux figures 1 et 2. Un dispositif D, selon l'invention, peut en effet comporter n'importe quel type de module de commutation MC. Ainsi, son module de commutation MC peut comprendre un premier étage E1 agencé sous la forme d'un ou plusieurs démultiplexeur(s) (éventuellement adapté à l'extraction de canaux), un deuxième étage E2 agencé sous la forme d'un ou plusieurs multiplexeur(s) (éventuellement adapté à l'insertion de canaux), et un troisième étage E3 agencé sous la forme d'une matrice de commutation reliant les premières sorties du (ou des) démultiplexeur(s) aux secondes entrées du (ou des) multiplexeur(s).

Selon l'invention, un dispositif D comprend également des moyens de traitement MTi implantés au niveau de chacun des ports d'entrée de son noeud de commutation NC et chargés d'adjoindre à chaque canal (ou à chacun des canaux d'un multiplex) parvenant sur chaque port d'entrée (et/ou d'insertion) une signature représentative au moins du noeud de commutation NC dans lequel ils sont implantés.

Ainsi, chaque canal qui emprunte un chemin optique de connexion se voit adjoindre dans chaque noeud NC qu'il « traverse » (ou qui l'insère dans le trafic) une signature comportant une première information représentative de ce noeud NC. En d'autres termes, chaque canal porte la trace de son passage dans chaque noeud du chemin optique de connexion qu'il emprunte. Il est alors possible, comme on le verra plus loin, soit de déterminer en chaque noeud chaque signature adjointe à chaque canal, afin de reconstituer le chemin qu'il a emprunté (mode d'analyse locale), soit de déterminer au niveau du « dernier » noeud d'un chemin optique de connexion emprunté par un canal chaque signature qui lui a été adjointe par chaque noeud de ce chemin optique de connexion.

Tout type de signature susceptible de représenter un noeud NC peut être adjoint à un canal par les moyens de traitement MTi de ce noeud NC, dès lors qu'il n'implique pas une conversion optique/électrique/optique.

Il est rappelé que l'on entend ici par « signature » toute modification appliquée à un canal ou un multiplex et permettant de marquer le passage de ce canal ou des canaux qui composent ce multiplex en un endroit donné.

Préférentiellement, les modules de traitement MTi sont agencés pour appliquer une signature à tous les canaux d'un multiplex simultanément.

Par exemple, les moyens de traitement MTi d'un noeud NC peuvent appliquer à chaque canal reçu par chaque port d'entrée, une même surmodulation de fréquence f_{NC}, représentative de leur noeud NC et formant une première information. Dans ce cas, chaque noeud du réseau doit disposer de sa propre fréquence de sur-modulation (également appelée « pilot tone »).

Il est préférable que chaque fréquence de sur-modulation satisfasse à au moins deux règles.

Il faut tout d'abord que chaque fréquence de sur-modulation soit suffisamment grande pour être transparente aux amplificateurs installés sur les lignes optiques FEi et FSj du réseau. Cela est plus particulièrement le cas lorsque les amplificateurs sont de type EDFA (« Erbium Doped Fibre Amplifier » - amplificateur à fibre dopée erbium). En effet, ce type d'amplificateur lisse le signal qu'il amplifie lorsque les modulations ont une fréquence inférieure à un premier seuil. Par conséquent, si l'on veut conserver une sur-modulation lors de la traversée d'un EDFA il faut que sa fréquence de sur-modulation soit supérieure au premier seuil. Typiquement, il est préférable que chaque fréquence de sur-modulation soit supérieure à environ 10 kHz.

Il faut ensuite que chaque fréquence de sur-modulation soit suffisamment petite pour être en dehors de l'étendue spectrale des données représentées par les signaux des canaux. En effet, lorsqu'une fréquence de sur-modulation dépasse un second seuil, cela peut perturber le signal car cela peut correspondre à des fréquences représentatives d'une suite d'un grand nombre de bits (0 ou 1) identiques. Par conséquent, si l'on ne veut pas perturber un signal il faut que la fréquence de sur-modulation soit inférieure au second seuil. Typiquement, il est préférable que chaque fréquence de surmodulation soit inférieure à environ 1 MHz.

Il est important de noter que la signature qui est adjointe à chaque canal, par les moyens de traitement MTi d'un noeud NC, peut être représentative non seulement de ce noeud NC, mais également du port d'entrée qui a reçu le canal. Tout type de seconde information susceptible de représenter un port d'entrée d'un noeud NC (et de le différencier par rapport aux autres ports de ce noeud NC) peut être adjoint à un canal, en complément de la première information, par les moyens de traitement MTi de ce noeud NC, dès lors qu'il n'implique pas une conversion optique/électrique/optique.

Par exemple, les moyens de traitement MTi d'un noeud NC peuvent appliquer à chaque première information, adjointe à chaque canal reçu par un port d'entrée, une seconde information représentative de ce port d'entrée.

En d'autres termes, on marque sur chaque canal de longueur d'onde entrant, en amont de la matrice de commutation, une information identifiant le port d'entrée correspondant. Ainsi, en détectant ces informations au niveau d'une sortie, en aval de la matrice de commutation, il est possible de reconstituer le chemin emprunté par chaque canal à l'intérieur de la matrice de commutation (mode d'analyse locale), et donc de déterminer un état de commutation physique de la matrice de commutation. Cet état de commutation peut alors être comparé à un état de programmation, résultant par exemple d'instructions données depuis un dispositif de gestion centralisée du réseau, afin de détecter une défaillance du matériel en cas de non concordance.

Par exemple, cette seconde information peut se présenter sous la forme d'un déphasage dans la sur-modulation appliquée en tant que première information. Dans ce cas, les phases des premières informations, adjointes aux canaux reçus sur des ports d'entrée différents, diffèrent les unes des autres. Dans les exemples illustrés sur les figures 1 et 2, les moyens de traitement MTi peuvent par exemple appliquer un déphasage nul sur le premier port d'entrée couplé à la première fibre d'entrée FE1, un déphasage de *Π* sur le deuxième port d'entrée couplé à la deuxième fibre d'entrée FE2, un déphasage de -Π/2 sur le troisième port d'entrée couplé à la troisième fibre d'entrée FE3, et un déphasage de *+Π*/*2* sur le quatrième port d'entrée couplé à la quatrième fibre d'entrée FE4.

La combinaison d'une sur-modulation à une fréquence f_{NC} (représentative d'un noeud NC donné) et, par exemple, d'un déphasage (représentatif de l'un des N ports d'entrée d'un noeud NC) forme une signature qui permet d'indiquer sans ambiguïté par quel port d'entrée d'un noeud a transité un canal. Du fait de cette combinaison, il n'est pas nécessaire de prévoir des secondes informations (par exemple des déphasages différents) pour des ports d'entrée de noeuds différents. Un même multiplet de N secondes informations (par exemple N déphasages) différentes peut donc être utilisé dans chaque noeud (bien entendu si ces noeuds comportent tous le même nombre de ports d'entrée).

Ce mode de réalisation peut nécessiter la définition au sein du réseau de références de parties locales de signatures utiles pour déterminer le port d'entrée au niveau d'un noeud NC donné.

Au lieu d'appliquer aux canaux qui parviennent sur un port d'entrée donné une seconde information sous la forme d'un déphasage choisi des premières informations, on peut par exemple leur appliquer une seconde information sous la forme d'une sur-modulation de la première information selon une fréquence ou une combinaison de bits propre à ce port d'entrée. En d'autres termes, selon une première variante, un noeud NC se voit attribuer un lot de fréquences de surmodulation identifiant de manière unique ce noeud, une fréquence respective du lot étant attribuée à chaque port d'entrée du noeud. Selon une deuxième variante, la surmodulation appliquée au niveau des ports d'entrée d'un noeud présente une fréquence particulière attribuée à ce noeud et porte de surcroît un code binaire respectif permettant de différencier les ports d'entrée. Ce code peut être appliqué en modulation FSK (Frequency Shift Keying) i.e. en modulant la fréquence de la surmodulation autour de la valeur attribuée au noeud.

Afin d'adjoindre chaque signature au niveau de chaque port d'entrée, les moyens de traitement MTi peuvent par exemple se présenter sous une forme modulaire, comme illustré sur les figures 1 et 2. Dans ce cas, chaque port d'entrée est pourvu d'un module de traitement MTi chargé d'adjoindre aux canaux qu'il reçoit une signature représentative du noeud NC qu'il équipe.

Par exemple, chaque module de traitement MTi peut être un atténuateur optique variable (ou VOA) commandé électriquement. Dans ce cas, l'application à un canal d'une première information (comme par exemple une sur-modulation) se fait par atténuation de sa puissance selon la fréquence associée au noeud NC comprenant le port d'entrée qui l'a reçu. Un tel module de traitement MTi (VOA) est également capable d'appliquer à chaque première information une seconde information, par exemple sous la forme d'un déphasage choisi, destinée à différencier ce port d'entrée des autres ports d'entrée du même noeud NC.

D'autres types de module de traitement MTi que le VOA peuvent être utilisés pour adjoindre une signature aux canaux. Ainsi, on peut par exemple utiliser des modulateurs ou des modules acousto-optiques.

Comme cela est illustré sur les figures 1 et 2, et comme évoqué précédemment, un noeud NC, selon l'invention, peut également comporter des moyens d'analyse MAi couplés à certaines au moins des voies de sortie de son dispositif de commutation D, afin de déterminer, au moins, la signature qui a été adjointe à chaque canal reçu par les moyens de traitement MTi implantés sur les ports d'entrée de ce même dispositif de commutation D.

Préférentiellement, et comme illustré, chaque port de sortie fait l'objet d'une analyse par les moyens d'analyse. Mais, on peut également envisager que les ports d'extraction fassent l'objet d'une analyse par les moyens d'analyse. Cela permet notamment de faire une analyse de bout-en-bout (ou « end-to-end ») dans le dernier noeud d'un réseau. On peut également envisager que seuls les ports d'extraction fassent l'objet d'une analyse par les moyens d'analyse.

Préférentiellement, les moyens d'analyse MAi sont capables de déterminer chaque signature qui a été adjointe à chaque canal par les moyens de traitement MTi de chaque noeud de commutation par lequel ce canal a transité, y compris le leur. Cela est notamment nécessaire lorsque seuls les ports d'extraction que comprend un dispositif D font l'objet d'une analyse par les moyens d'analyse MAi, ce qui est par exemple le cas dans un réseau en anneau.

Les moyens d'analyse peuvent être soit de type modulaire, soit de type mutualisé.

Dans le cas mutualisé, un unique module d'analyse sert à analyser les signatures adjointes aux canaux délivrés par plusieurs voies de sortie (ports de sortie et/ou ports d'extraction). Dans ce cas, chaque port de sortie à analyser est pourvu d'un séparateur optique en Y couplé, d'une part, à la fibre de sortie FSj correspondante, et d'autre part, à l'une des entrées d'un commutateur chargé de sélectionner l'un des ports de sortie à analyser et de délivrer sur une sortie les canaux reçus par ce port de sortie à analyser pour alimenter l'entrée du module d'analyse mutualisé.

Dans le cas modulaire, chaque voie de sortie devant faire l'objet d'une analyse est équipée d'un module d'analyse qui lui est propre. C'est notamment le cas des ports de sortie dans les exemples illustrés sur les figures 1 et 2. Plus précisément, afin de déterminer au niveau d'une voie de sortie chaque signature adjointe à chaque canal, cette voie de sortie est pourvue d'un séparateur optique en Y couplé, d'une part, à la fibre de sortie FSj correspondante, et d'autre part, au module d'analyse MAi correspondant, et chargé de prélever une petite partie de la puissance des canaux délivrés par ce port de sortie pour alimenter ce module d'analyse MAi. Le séparateur optique en Y est par exemple de type 95% / 5%.

La méthode de détermination d'une signature adjointe à un canal dépend du (ou des) type(s) de technique utilisé(s) pour générer et adjoindre cette signature. Quelle que soit la méthode utilisée, le module d'analyse MAi doit tout d'abord séparer spectralement (ou filtrer) les canaux à analyser, qui sont délivrés sous la forme d'un multiplex par une voie de sortie (ici un port de sortie), au moyen d'un sous-module de filtrage optique. Puis, ce module d'analyse MAi doit convertir le canal en signal électrique au moyen d'un sous-module de conversion optique/electrique. La bande passante de ce sous-module est préférentiellement appropriée aux fréquences contenues dans les signatures. Puis ce module d'analyse MAi doit analyser ce signal électrique, au moyen d'un sous-module d'analyse électrique, afin d'identifier les signatures, c'est-à-dire dans un premier temps éventuellement la ou les fréquences des sur-modulations constituant les premières informations, et dans un deuxième temps identifier la phase (ou les sur-modulations) constituant la deuxième information propre au noeud (ou les deuxièmes informations des noeuds précédents).

Le sous-module de filtrage optique peut par exemple être réalisé au moyen d'un filtre accordable.

Le sous-module de conversion optique/électrique peut par exemple se présenter sous la forme d'une photodiode, placée en sortie du sous-module de filtrage optique et chargée de transformer les canaux optiques en signaux électriques.

Les sous-modules de filtrage optique et de conversion optique/électrique peuvent éventuellement être rassemblés en un seul module appelé OCM (pour « Optical Channel Monitor ») qui peut-être réalisé soit en cascadant un filtre accordable et une photodiode soit sous la forme d'un réseau de diffraction séparant les longueurs d'onde vers une barrette de photodiodes.

Le sous-module d'analyse électrique peut par exemple se présenter sous la forme d'un sous-module de détection synchrone (« lock-in détection ») chargé de déterminer la fréquence de sur-modulation des signaux électriques et l'éventuel déphasage de cette sur-modulation.

Bien entendu, le mode de réalisation des sous-modules d'analyse électrique varie en fonction de la nature des premières et secondes informations.

Grâce à ce type d'analyse des canaux, on peut déterminer en un noeud NC chaque signature adjointe à chaque canal, et donc déterminer au moins chaque noeud par lequel il a transité (lorsque l'on connaît la fréquence de sur-modulation associée à chaque noeud), ainsi qu'éventuellement chaque port d'entrée utilisé dans chaque noeud de transit. Connaissant les ports d'entrée qui ont reçus les canaux, on peut en déduire les ports de sortie des noeuds dans lesquels ils ont transité et qui sont couplés à ces noeuds d'entrée. On peut ainsi reconstituer le chemin emprunté précédemment par chaque canal, en chaque lieu d'analyse.

On notera que certains au moins des ports d'insertion de canaux (sorties des modules d'insertion T1 et T2) peuvent être pourvus d'un module de traitement MTi (additionnels) du type de ceux décrits ci-avant. Lorsqu'ils ne sont pas pourvus de module de traitement MTi, les canaux qui sont insérés dans un noeud donné ne comportent aucune signature lorsqu'ils parviennent au niveau d'un port de sortie de ce noeud. Cette absence de signature sur des canaux constitue malgré tout une signature valable localement puisqu'elle signale qu'ils ont été insérés dans le noeud courant.

Par ailleurs, lorsque le plan de gestion signale aux noeuds les canaux qui doivent parvenir sur chacun de leurs ports d'entrée et les canaux qui doivent être délivrés sur chacun de leurs ports de sortie, les moyens d'analyse MAi peuvent vérifier si l'état physique de leur dispositif de commutation D correspond effectivement à son état logique. En cas de non correspondance (ou d'inadéquation), les moyens d'analyse MAi en déduisent qu'il y a un problème, et ils peuvent par exemple générer un message d'alarme afin que soit mis en oeuvre un mécanisme de protection destiné à remédier au problème détecté.

L'invention ne se limite pas aux modes de réalisation de dispositif de commutation optique et de noeud de communication décrits ci-avant, seulement à titre d'exemple, mais elle englobe toutes les variantes que pourra envisager l'homme de l'art dans le cadre des revendications ci-après.

## Revendications

1. Dispositif de commutation optique (D) pour un noeud de commutation (NC) d'un réseau optique transparent, comprenant i) au moins un port d'entrée propre à être couplé à une ligne optique amont (FEi) dédiée au transport de canaux multiplexés, ii) au moins une voie de sortie, et iii) des moyens de commutation (MC) couplant chaque port d'entrée à chaque voie de sortie, **caractérisé en ce qu'**il comprend en outre des moyens de traitement (MTi) agencés au niveau dudit au moins un port d'entrée pour adjoindre aux canaux qui parviennent sur chaque port d'entrée dudit dispositif de commutation (D) une signature comportant une première information représentative au moins de ce noeud de commutation (NC).

2. Dispositif selon la revendication 1, **caractérisé en ce que** lesdits moyens de traitement (MTi) sont agencés pour adjoindre à chaque canal une signature comportant une première information représentative de leur propre noeud de commutation (NC) et une seconde information représentative du port d'entrée qui a reçu ce canal.

3. Dispositif selon l'une des revendications 1 et 2, **caractérisé en ce que** lesdits moyens de traitement (MTi) sont agencés pour appliquer une même sur-modulation d'amplitude à une fréquence choisie, constituant une première information et représentative dudit noeud de commutation (NC), à chaque canal reçu par chaque port d'entrée.

4. Dispositif selon l'une des revendications 2 et 3, **caractérisé en ce que** lesdits moyens de traitement (MTi) sont agencés pour appliquer aux premières informations qui sont appliquées aux canaux reçus par des ports d'entrée différents des secondes informations sous la forme de déphasages différents, représentatifs respectivement desdits ports d'entrée.

5. Dispositif selon l'une des revendications 2 et 3, **caractérisé en ce que** lesdits moyens de traitement (MTi) sont agencés pour appliquer aux premières informations qui sont appliquées aux canaux reçus par des ports d'entrée différents des secondes informations sous la forme de sur-modulations d'amplitude à des fréquences différentes, représentatives respectivement desdits ports d'entrée.

6. Dispositif selon l'une des revendications 1 à 5, **caractérisé en ce que** lesdits moyens de traitement comportent des modules de traitement (MTi) en nombre égal au moins au nombre desdits ports d'entrée et agencés chacun pour adjoindre ladite signature aux canaux reçus par le port d'entrée correspondant.

7. Dispositif selon l'une des revendications 1 à 6, **caractérisé en ce que** lesdits moyens de traitement (MTi) comportent au moins un module de traitement additionnel agencé pour adjoindre ladite signature aux canaux introduits par un port d'insertion couplé à un module d'insertion (T1,T2).

8. Dispositif selon la revendication 7, **caractérisé en ce que** lesdits moyens de traitement (MTi) comportent des modules de traitement additionnels en nombre égal au nombre des ports d'insertion et agencés chacun pour adjoindre ladite signature aux canaux introduits par le port d'insertion correspondant.

9. Dispositif selon l'une des revendications 6 à 8, **caractérisé en ce que** chaque module de traitement (MTi) est agencé pour adjoindre une seconde information choisie à chaque première information.

10. Dispositif selon l'une des revendications 6 à 9, **caractérisé en ce que** chaque module de traitement (MTi) est agencé sous la forme d'un atténuateur optique variable commandé électriquement.

11. Dispositif selon l'une des revendications 1 à 10, **caractérisé en ce qu'**il comprend en outre des moyens d'analyse (MAi) agencés pour analyser les canaux qui sont délivrés par certaines au moins des voies de sortie, de manière à déterminer au moins la signature qui leur a été adjointe par lesdits moyens de traitement (MTi) dudit noeud de commutation (NC).

12. Dispositif selon la revendication 11, **caractérisé en ce que** lesdits moyens d'analyse (MAi) sont agencés pour analyser les canaux délivrés par des voies de sortie, de manière à déterminer chaque signature qui leur a été adjointe par les moyens de traitement (MTi) de chaque noeud de commutation (NC) par lequel ils ont transité.

13. Dispositif selon l'une des revendications 11 et 12, **caractérisé en ce que** lesdits moyens d'analyse comportent des modules d'analyse (MAi) en nombre égal au nombre de voies de sortie à analyser et agencés chacun pour analyser les canaux reçus par la voie de sortie correspondante.

14. Dispositif selon l'une des revendications 11 et 12, **caractérisé en ce qu'**il comprend un commutateur comprenant des entrées couplées respectivement aux voies de sortie à analyser et au moins une sortie, et **en ce que** lesdits moyens d'analyse comportent un module d'analyse mutualisé comprenant une entrée couplée à la sortie dudit commutateur et agencé pour analyser les canaux reçus par l'une desdites voies de sortie à analyser, sélectionnée par ledit commutateur.

15. Dispositif selon l'une des revendications 13 et 14, **caractérisé en ce que** chaque module d'analyse (MAi) comprend un sous-module de filtrage optique chargé de séparer les canaux délivrés par la voie de sortie correspondante, au moins un sous-module de conversion optique/électrique chargé de convertir chaque canal en signal électrique, et un sous-module d'analyse électrique chargé d'identifier chaque signature adjointe à chaque canal séparé.

16. Dispositif selon la revendication 2 prise en combinaison avec la revendication 11, **caractérisé en ce que** lesdits moyens d'analyse (MA) sont aptes à déterminer un état physique du dispositif de commutation (D) à partir de la détermination des canaux délivrés par une voie de sortie et de la signature qui a été adjointe à chacun desdits canaux par lesdits moyens de traitement (MT) du dispositif de commutation, à vérifier une correspondance entre ledit état physique du dispositif de commutation et un état de programmation définissant les canaux qui doivent être délivrés sur ladite voie de sortie et les ports d'entrée sur lesquels lesdits canaux doivent parvenir audit dispositif de commutation, et à générer un message d'alarme en cas de non correspondance.

17. Dispositif selon l'une des revendications 1 à 16, **caractérisé en ce que** lesdits moyens de commutation (MC) comprennent i) un premier étage (E1) comportant N modules de diffusion (MDi; MD'i) munis chacun d'une première entrée, couplée à l'un desdits ports d'entrée, et M premières sorties, propres chacune à délivrer au moins l'un des canaux multiplexés reçus par ladite première entrée, ii) un deuxième étage (E2) comportant M modules de fusion (MFj) comprenant chacun N deuxièmes entrées, propres à recevoir chacune au moins un canal d'une longueur d'onde, et une deuxième sortie couplée à un port de sortie constituant l'une desdites voies de sortie et propre à délivrer au moins un canal reçu sur l'une desdites deuxièmes entrées, et iii) un troisième étage (E3) comportant au moins NxM liens optiques (L) couplant au moins lesdites premières sorties auxdites deuxièmes entrées de sorte que chacun des N modules de diffusion (MDi ; MD'i) soit couplé à chacun des M modules de fusion (MFj).

18. Dispositif selon la revendication 17, **caractérisé en ce que** lesdits modules de diffusion (MDi ; MD'i) sont choisis dans un groupe comprenant au moins les coupleurs optiques à une entrée et M sorties et les modules de sélection de longueurs d'onde.

19. Dispositif selon l'une des revendications 17 et 18, **caractérisé en ce que** lesdits modules de fusion (MFj) sont choisis dans un groupe comprenant au moins les coupleurs optiques à N entrées et une sortie et les modules de sélection de longueurs d'onde.

20. Dispositif selon l'une des revendications 18 et 19, **caractérisé en ce que** lesdits modules de sélection de longueurs d'onde (MDi ;MD'i, MFj) sont du type dit « WSS ».

21. Dispositif selon l'une des revendications 1 à 20, **caractérisé en ce que** lesdits moyens de traitement (MTi) sont agencés pour appliquer une signature à tous les canaux d'un multiplex, simultanément.

22. Noeud de commutation (NC) pour un réseau optique à multiplexage de longueurs d'onde, **caractérisé en ce qu'**il comprend au moins un dispositif de commutation optique (D) selon l'une des revendications précédentes, ledit noeud de commutation étant agencé sous la forme d'un brasseur optique transparent ou d'un multiplexeur optique à insertion/extraction.
